# DEMANDE DE BREVET EUROPEEN

(11) **EP 1 168 118 A1**
(43) Date de publication de la demande: **02.01.2002**
(21) Numéro de dépôt: 01400889.0
(22) Date de dépôt: 05.04.2001
(51) Int. Cl.: G05B 17/02, G05B 13/04

(54) **Système de compensation par prédiction de la dynamique d'un capteur, notamment pur véhicule automobile**

(30) Priorité: 27.06.2000 FR 0008262
(71) Demandeur: Peugeot Citroen Automobiles SA, 92200 Neuilly sur Seine (FR)
(72) Inventeur: Aioun, François, 91190 Gif sur Yvette (FR)
(74) Mandataire: Jacobson, Claude

(57) **Abrégé**

Ce système de compensation par prédiction de la dynamique d'un capteur notamment pour véhicule automobile, est caractérisé en ce qu'il comporte des moyens (4) formant estimateur statique de la grandeur mesurée par le capteur, établis à partir de l'inverse du modèle statique de celui-ci, recevant en entrée la sortie du capteur et dont la sortie est reliée à des moyens (3) formant prédicteur dynamique de cette grandeur, établis à partir de l'inverse du modèle dynamique du capteur, pour délivrer en sortie une valeur dynamique prédite de la grandeur.

## Description

La présente invention concerne un système de compensation par prédiction de la dynamique d'un capteur, notamment pour véhicule automobile.

Les systèmes de régulation utilisés dans l'industrie automobile nécessitent l'utilisation d'un nombre croissant de capteurs pour déterminer l'état de grandeurs physiques telles que par exemple des pressions, des températures, des débits, etc.

Ces systèmes sont alors utilisés pour asservir ces grandeurs à des valeurs prédéterminées ou pour détecter d'éventuels dysfonctionnements de certains organes d'un véhicule automobile.

Mais les limites technologiques et les contraintes de coûts liées à des implantations dans de telles applications, imposent souvent l'emploi de capteurs dont les temps de réponse sont insuffisants pour garantir une bonne précision de mesure lors de variations rapides de ces grandeurs.

Le but de l'invention est donc de résoudre ces problèmes, en proposant un système permettant d'assurer une compensation par prédiction de la dynamique de tels capteurs, de façon à améliorer l'estimation de la grandeur tout en réduisant le coût des capteurs implantés.

A cet effet, l'invention a pour objet un système de compensation par prédiction de la dynamique d'un capteur, notamment pour véhicule automobile, caractérisé en ce qu'il comporte des moyens formant estimateur statique de la grandeur mesurée par le capteur, établis à partir de l'inverse du modèle statique de celui-ci, recevant en entrée la sortie du capteur et dont la sortie est reliée à des moyens formant prédicteur dynamique de cette grandeur, établis à partir de l'inverse du modèle dynamique du capteur, pour délivrer en sortie une valeur dynamique prédite de la grandeur.

L'invention sera mieux comprise à la lecture de la description qui va suivre, donnée uniquement à titre d'exemple et faite en se référant aux dessins annexés, sur lesquels :
- la Fig.1 illustre la modélisation d'un capteur ;
- la Fig.2 illustre la structure générale d'un système de compensation selon l'invention;
- la Fig.3 illustre la modélisation d'une sonde de température ;
- la Fig.4 illustre un circuit électronique.de sonde de température ; et
- la Fig.5 illustre un système de compensation de la dynamique d'une sonde de température.

Le principe à la base du système selon l'invention consiste à implémenter dans un calculateur associé à un capteur et fournissant une estimation de la grandeur mesurée par celui-ci, un modèle inverse de ce capteur.

Celui-ci permet alors à partir du signal délivré par le capteur, de reconstituer une valeur réelle prédite de la grandeur mesurée.

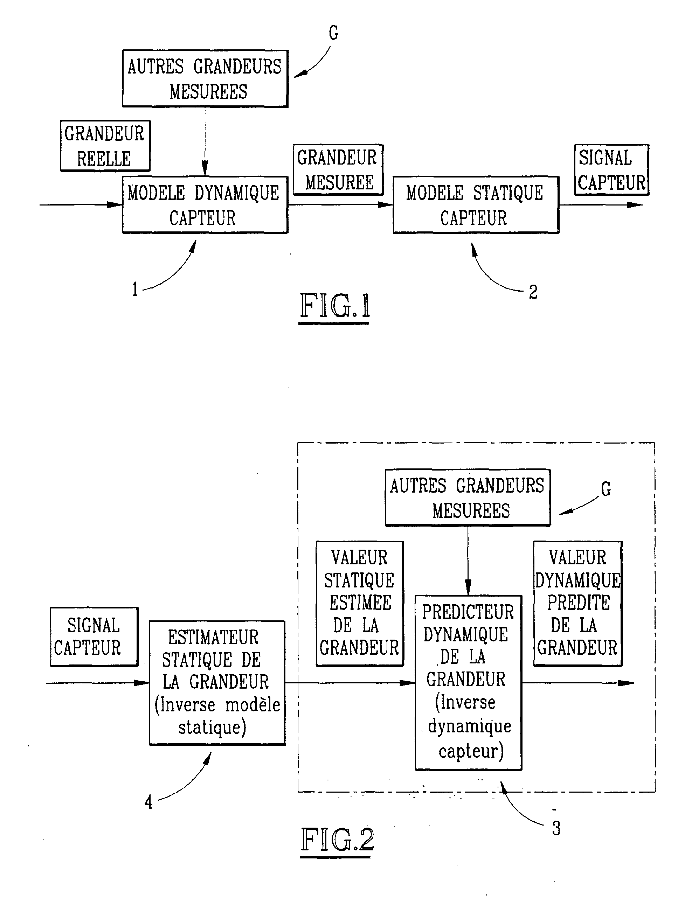

Pour obtenir ce modèle inverse du capteur, il convient de décomposer arbitrairement son comportement en deux parties, comme cela est illustré sur la figure 1.

La première partie est un modèle dynamique du capteur, désigné par la référence générale 1, qui est établi à partir de relevés expérimentaux réalisés à l'aide du capteur concerné et d'au moins un capteur faisant office de modèle de référence correspondant.

Cette première partie 1 transforme la grandeur réelle en une grandeur mesurée qui représente l'information sur la grandeur perçue par le capteur.

Par exemple, si l'on mesure la température d'un gaz au moyen d'une sonde de température, cette partie traduit le temps de réponse de la mesure inhérent à la transmission de la chaleur au capteur et à l'écoulement du fluide sur celui-ci.

Pour modéliser cette partie, on utilise des mesures expérimentales de la grandeur, obtenues d'une part avec le capteur considéré et d'autre part, avec un capteur plus rapide faisant office de modèle de référence, de dynamique négligeable et situé au même emplacement.

Les variations de la grandeur pour ces relevés expérimentaux doivent alors être représentatives de tous les modes de fonctionnement du système physique, organe ou véhicule.

Lorsque les paramètres du modèle dynamique dépendent d'autres grandeurs mesurées G que la grandeur considérée, comme par exemple pour la dynamique d'un capteur de température d'un gaz, le débit ou la température du gaz, ceux-ci peuvent être calculés au moyen de cartographies ayant pour entrées ces grandeurs mesurées.

La deuxième partie 2 représente la transformation de cette information en un signal électrique pour le calculateur associé à ce capteur.

Celle-ci est supposée statique, car les dynamiques du circuit électronique du capteur sont négligeables par rapport aux dynamiques des phénomènes physiques.

Le plus souvent les relations non linéaires statiques permettant d'obtenir ce modèle sont connues et données par les fournisseurs des matériels ainsi que les tolérances sur les paramètres intervenant dans ces relations, telles que par exemple les tolérances de fabrication de ces composants.

Ces tolérances permettent de choisir les valeurs des paramètres pour obtenir un modèle moyen.

Le modèle inverse est ensuite obtenu en inversant chacune des parties suivant le schéma de la figure 2 qui illustre un système selon l'invention.

L'inversion de la partie dynamique est relativement délicate, car la grandeur mesurée est fonction uniquement des valeurs passées de la grandeur physique (dynamique lente du capteur filtrant les variations instantanées de la grandeur physique).

Le modèle inverse correspondant réalise donc une prédiction qui pour être calculée en temps réel doit être filtrée avec une dynamique arbitrairement choisie et suffisamment rapide.

D'autres contraintes d'implémentabilité dans le calculateur s'ajoutent à celle-ci, notamment les précisions de codage du signal et des paramètres du modèle ou la discrétisation de ce modèle.

En effet, le comportement du modèle dynamique du capteur peut être très sensible à la précision des valeurs de ces paramètres et une simple troncature de ces valeurs peut totalement changer ces comportements.

Pour ajuster les paramètres du prédicteur, on applique donc la procédure directe suivante, à savoir :
- On réalise tout d'abord des mesures expérimentales de la grandeur d'une part avec le capteur considéré pour obtenir une valeur mesurée, et d'autre part, avec un capteur plus rapide de dynamique négligeable situé au même endroit, pour obtenir des valeurs de référence.

Les variations de la grandeur pour ces essais doivent être représentatives de tous les mêmes modes de fonctionnement du système physique.
- Puis on calcule les paramètres du prédicteur, représenté sous la forme implémentée dans le calculateur ( discrétisation, troncature des paramètrès, etc..), au moyen d'une procédure d'optimisation sous contrainte.

Cette procédure minimise l'écart entre la valeur prédite et la valeur de référence.
- Enfin, on valide le réglage du prédicteur obtenu sur d'autres jeux de données d'essais.

Les variations de dynamique du capteur dépendant d'autres grandeurs mesurées G sont prises en compte en adaptant les valeurs des paramètres du prédicteur en fonction des valeurs mesurées de ces grandeurs.

La robustesse vis-à-vis des incertitudes sur la dynamique du capteur dues aux dispersions de série, est assurée en réglant les paramètres du prédicteur de façon à compenser la dynamique d'un capteur ayant le temps de réponse le plus rapide.

Ceci permet donc d'obtenir des moyens 3 formant prédicteur dynamique (Fig.2).

L'inversion de la partie statique se déduit le plus souvent directement des équations du modèle statique ou moyen (inversion algébrique) et permet d'obtenir des moyens 4 formant estimateur statique de la grandeur (Fig.2).

Un tel système peut par exemple être intégré à un système de surveillance et d'aide à la régénération d'un filtre à particules intégré dans une ligne d'échappement d'un moteur Diesel de véhicule automobile.

En effet, des mesures de la température des gaz d'échappement en différents points de la ligne d'échappement sont nécessaires pour réaliser une détection de températures excessives préjudiciables au fonctionnement du filtre ou l'estimation de grandeurs telles que le débit de gaz.

Or, les capteurs réalisant ces mesures actuellement ont des dynamiques trop lentes. L'utilisation du système de compensation selon l'invention permet de résoudre ces problèmes.

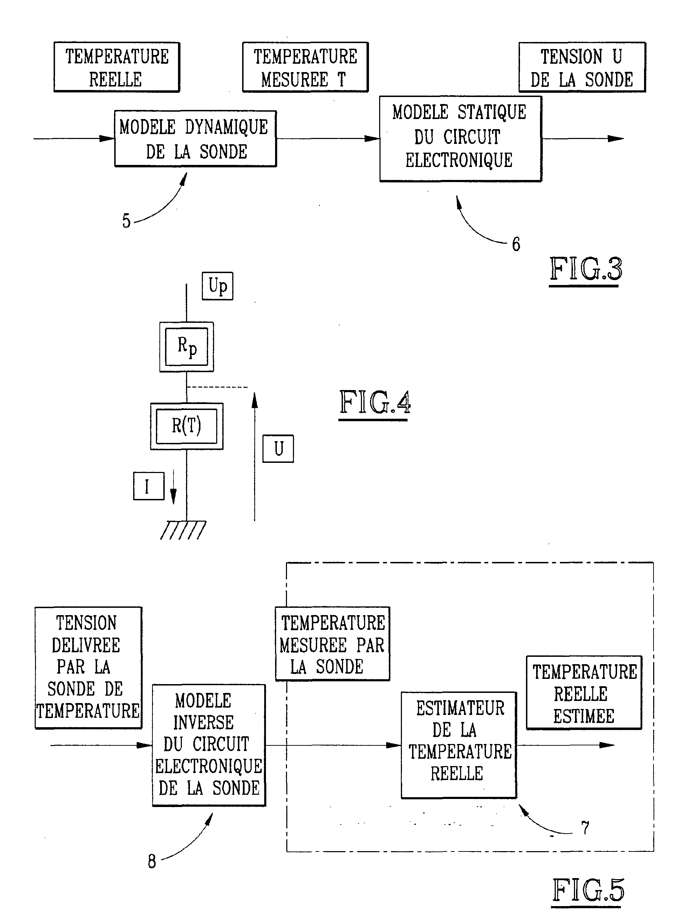

La démarche générale décrite précédemment a été appliquée pour concevoir un tel système: La modélisation de la sonde de température correspondante a été réalisée suivant la décomposition représentée sur la figure 3, en un modèle dynamique 5 et un modèle statique 6.

La caractéristique dynamique entre la température réelle et la température estimée est modélisée par un filtre passe-bas à paramètres fixes.

La caractéristique statique reliant la température mesurée T à la tension U délivrée par l'électronique de la sonde est illustrée sur la figure 4 et est obtenue à partir de la loi d'Ohm appliquée à une thermistance U=R(T)I et à une résistance Rp (Up=U+Rpl).

La caractéristique R(T) est soit donnée par le fournisseur de la sonde, soit identifiée à partir de mesures de tensions faites pour des températures de gaz constantes et connues.

Le système de compensation d'une telle sonde est obtenu en inversant chacune des parties du modèle.

Une telle structure est représentée sur la figure 5, et comporte un prédicteur 7 qui est un filtre passe-haut dont le nombre de zéro est égal au nombre de pôles du filtre modélisant la dynamique de la sonde, et un modèle inverse statique 8.

Le réglage des paramètres du prédicteur est réalisé en appliquant la procédure décrite précédemment, le capteur de référence étant par exemple constitué par un thermocouple.

Les données expérimentales utilisées dans cette procédure sont obtenues sur un véhicule à partir de cycles routiers permettant de couvrir toute la plage de variations de températures.

On conçoit qu'un tel système permet de résoudre un certain nombre de problèmes concernant la précision et le coût des capteurs utilisés dans ce type d'applications.

## Revendications

1. Système de compensation par prédiction de la dynamique d'un capteur notamment pour véhicule automobile, **caractérisé en ce qu'**il comporte des moyens (4; 8) formant estimateur statique de la grandeur mesurée par le capteur, établis à partir de l'inverse du modèle statique de celui-ci, recevant en entrée la sortie du capteur et dont la sortie est reliée à des moyens (3 ;7) formant prédicteur dynamique de cette grandeur, établis à partir de l'inverse du modèle dynamique du capteur, pour délivrer en sortie une valeur dynamique prédite de la grandeur.

2. Système selon la revendication 1, **caractérisé en ce que** le modèle dynamique du capteur est établi à partir de relevés expérimentaux réalisés à l'aide du capteur concerné et d'au moins un capteur de référence correspondant.

3. Système selon la revendication 1 ou 2, **caractérisé en ce que** le capteur est un capteur de température des gaz d'échappement d'un moteur de véhicule automobile.
